# EUROPEAN PATENT SPECIFICATION

(11) **EP 3 710 775 B1**
(45) Date of publication and mention of the grant of the patent: **05.04.2023**
(21) Application number: 18815289.6
(22) Date of filing: 28.11.2018
(51) Int. Cl.: G01B 7/14, F01D 11/24, F01D 17/06, F01D 21/00, G01H 1/00, G01M 15/14, G01P 3/481

(54) **APPARATUS AND METHOD FOR MEASURING CLEARANCE**
VORRICHTUNG UND VERFAHREN ZUR MESSUNG EINES SPIELS
APPAREIL ET PROCÉDÉ DE MESURE D'UN JEU

(30) Priority: 14.12.2017 GB 201720877
(43) Date of publication of application: 23.09.2020
(73) Proprietor: Oxford University Innovation Limited, Oxford, Oxfordshire OX2 0JB (GB)
(72) Inventor: CHANA, Kamaljit Singh, Oxford, Oxfordshire OX2 0ES (GB); SRIDHAR, Vikram, Oxford, OX2 9JU (GB)
(74) Representative: J A Kemp LLP
(86) International application number: PCT/GB2018/053436
(87) International publication number: WO 2019/115999

(56) References cited:
- US-A- 4 412 212
- US-A- 4 818 948
- US-A1- 2010 171 491
- US-A1- 2017 045 547

## Description

The invention relates to measuring clearance between a moving component and a reference component, particularly tip clearance of a rotor blade in a turbine.

It is known to detect the passage of blades using a sensor. A timing signal may be generated based on the output of the sensor to register passage of each blade past the sensor. Variations in the relative arrival times of the blade at the sensor can be used to detect distortion or vibrations in the rotor and thereby detect malfunctions. If the detection can be done quickly (e.g. within one or a relative small number of rotations of the rotor) corrective action, such as an emergency shutdown or lowering of power, can be initiated.

The same sensors can be used to detect tip clearance. The size of a peak signal as each blade passes is related to how close each blade is to the sensor and thereby provides a measure of the tip clearance. Determining that a tip clearance has moved outside of a range of acceptable tip clearances may also indicate a malfunction and be used to trigger corrective action. The clearance measurements may also be used for adaptive clearance control, where tip clearance is actively controlled, for example to improve fuel efficiency.

Noise in the output of the sensor causes errors in the tip clearance measurements. Noise can be reduced by increasing a data sampling rate, but this leads to a corresponding increase in the volume of data that needs to be stored and/or processed. Where it is desired to respond effectively to an emergency situation, near instantaneous reaction to changing clearance is required, which limits the extent to which large volumes of data can be processed in any sophisticated way (e.g. by modelling, curve fitting, etc.). An alternative approach would be to provide an alternative sensing system which is specifically optimized to detecting tip clearance, but this may undesirably increase the total number of sensors that are needed and/or the size and/or weight of each sensor.

US 2017/045547 A1 discloses a method for generating timing signals registering the passage of a component past a sensor. The method comprises: performing a first passage event integral of an output from the sensor over at least a portion of a first passage event of a reference component past the sensor; performing a second passage event integral of an output from the sensor over at least a portion of a second passage event of a component to be measured past the sensor, the second passage event occurring after the first passage event; and generating a timing signal when the second passage event integral is equal to a predetermined fraction of the first passage event integral.

US 4 412 212 A discloses a forage harvester including four multiple-bladed rotary cutting segments positioned near a shearbar. Four proximity sensors are mounted in shearbar bores near each of the cutting segments, each including a permanent magnet and a sensing coil. Blade motion near the sensors produces an electrical signal in the sensing coils. The signals from each sensing coil are integrated, sampled and averaged. The largest average signal is conditioned and applied to an analog meter for display to a vehicle operator.

US 4 818 948 A discloses a capacitive bridge-type probe for measuring blade tip clearance. An elongated conductive casing is filled with a dielectric material and has an opening at one end. The dielectric material forms a surface across the opening, and a plate member is disposed on the surface to form the sensitive arm of the capacitive probe. Formed within the casing are four capacitors, including the sensitive arm, which form a capacitive probe.

US 2010/171491 A1 discloses an eddy current sensor for use as a dynamic proximity sensor, particularly for monitoring of blade tip timing and clearance in turbomachinery. The sensor has a common coil for use in both generating a magnetic field in a proximate region and detecting the effect of eddy currents generated by said field in electrically conductive objects passing through that region. The coil is wound on a rectangular or other elongate former so that the coil is itself elongate in section. This can improve the resolution of the device when used for sensing the passage of objects of elongate section (such as a turbine blade tip when the sensor coil is oriented with its shorter cross-sectional dimension aligned with the shorter cross-sectional dimension of the respective object). Also described is a method of processing a signal wave form from such devices to derive 'trigger' points for blade tip timing.

It is an object of the invention to at least partially address one or more of the problems described above.

The scope of the invention is defined in the appended claims. Any "aspect", "example" and "embodiment" of the description not falling within the scope of the claims does not form part of the invention and is provided for illustrative purposes only.

According to an aspect of the invention, there is provided the apparatus of claim 1.

The use of integration removes (or at least greatly reduces) random or pseudo-random noise. Integration can be performed effectively, and in real time, using simple analogue circuits, minimizing a delay between passage of a component and generation of a corresponding signal containing information about clearance. Rapid response to fault conditions is therefore possible at reasonable cost. Complex, high power electronics or processing capacity to implement at high speed complex procedures such as curve fitting (an alternative approach for smoothing away noise in a pulse output from the sensor) are not required.

The need for separate apparatus for measuring clearance and for generating a timing signal is minimized or avoided. Both measurements are based on integration of the sensor output. Cost and/or weight savings can therefore be made.

The timing signal may comprise a short pulse marking passage of a particular region (e.g. a central region) of a component past the sensor. Passage of a plurality of components leads to a corresponding sequence of short pulses. Each of the timing signals or short pulses may be referred to as "trigger".

The use of integration removes (or at least greatly reduces) random or pseudo-random noise and therefore provides a more accurate timing signal. A more accurate timing signal makes it possible to compare timings between different passage events of the same component or different components reliably.

When measuring vibration modes in turbines, for example, the higher modes have a smaller blade deflection requiring a higher resolution of timing precision to resolve as the blade aerofoil movement gets smaller, typically below 100 microns, which is difficult to resolve using conventional triggering. Detection of fault conditions may therefore be more reliable and/or sensitive. Generating a timing signal based on the integrated signal provides a truer measure of a reference point of the passage event, e.g. a central point of the passage event, than prior art approaches based on minima and maxima in the sensor output because the accuracy of the timing signal is less influenced by component distortions. The accuracy and reliability of the approach is less sensitive to variations in the distance of closest approach between the components and the sensor than prior art approaches.

This approach is much less vulnerable to erratic signal spikes than prior art level based triggering methods. The improvement is achieved because the power of the spike (approx delta V x delta t) is small compared to the integral, whereas the spike delta V alone is large compared to the prior art level based trigger point voltages. A spike for example has a large value but short duration so it has a significant effect on level but only a small effect on the integral.

In an embodiment, the reference component and the component to be measured are different components and the reference component is positioned so as to be the component that passes the sensor directly before the component to be measured. In a cyclic system comprising a plurality of components to be measured (for example a plurality of blade tips on a rotor), using an immediately preceding component (e.g. blade tip) as the reference reduces sensitivity of the timing signal generation to variations in the cycle speed (e.g. rotation speed for a rotor). Differences between the sensor signal pulses from different components (e.g. different pulse heights or shapes) may affect the timing signals generated for each pulse but such differences will be expected to be the same from one cycle to the next and will not therefore affect the accuracy of measurements that compare the timing signals generated from one cycle to the next (which are useful for detecting fault conditions for example). Furthermore, using an immediately preceding component as the reference allows the fastest possible "real time" response because it is not necessary to wait for a whole cycle (e.g. turbine rotation) between measurement of the reference component and component to be measured.

In an embodiment, the reference component and the component to be measured are the same component (for example the same blade where the components to be measured comprise a plurality of blade tips on a rotor). In this case, the first and second passage events may occur in different cycles. An advantage of this approach is that the sensor signal pulses will tend to vary less between different passage events of the same component as compared to the variation seen between passage events of different components. On the other hand, the delay between the first and second passage events (at least one cycle) reduces the speed of the "real time" response and the approach may also be more sensitive to variations in the cycle speed (e.g rotor speed), which can change more over the duration of a cycle than during the time interval between passage of two adjacent components past the sensor.

In an embodiment, the information about clearance and/or the timing signal is/are generated in "real time" (i.e. rapidly, for example within one cycle or within a small number of cycles). This is facilitated by the particular method (based on integration) used to generate the clearance and/or timing signals. For example, simple and efficient analogue circuitry can be used to determine the integrals rapidly.

In an embodiment the each passage event integration is performed over a portion of a passage event in which the output from the sensor is above a reference value. This approach helps to ensure that the beginning and end points of the integration can be identified with high accuracy and reliability, using simple, e.g. analogue, components. In the case where a timing signal is being generated during a second passage event, the start of the corresponding passage event integration is identified with high accuracy and reliability, using simple, e.g. analogue, components. In an embodiment, the reference value is determined based on an average value of the output over a preceding period of time. The average value of the output can be obtained efficiently and reliably using analogue components (e.g. a low pass filter).

Embodiments of the invention will now be described, by way of example only, with reference to the accompanying drawings in which corresponding reference symbols indicate corresponding parts, and in which:
Figure 1 depicts an apparatus for measuring clearance according to an embodiment;
Figure 2 is a graph showing an example variation of an output from a sensor as a function of time during multiple consecutive passage events of a component past the sensor for multiple different nominal clearances;
Figure 3 is a magnified view of one of the peaks shown in Figure 2, showing distinct curves corresponding to different clearances;
Figure 4 is a graph depicting measurements of peak voltage values obtained for different blades at five different nominal clearances relative to a reference clearance;
Figure 5 is a graph depicting measurements using integral values obtained for the same blades and clearances as in Figure 4;
Figure 6 depicts integral values obtained at different speeds of rotation of a turbine;
Figure 7 depicts the integral values of Figure 6 after application of a speed-dependent correction;
Figure 8 depicts an output from the sensor for one passage event of a reference component, illustrating calculation of a first integral value;
Figure 9 depicts an output from the sensor for a subsequent passage event of the same or a different component, illustrating identification of a trigger point for generating a timing signal;
Figure 10 depicts an example circuit for implementing a measurement unit;
Figure 11 depicts an example implementation of the high pass filter in the circuit of Figure 10.

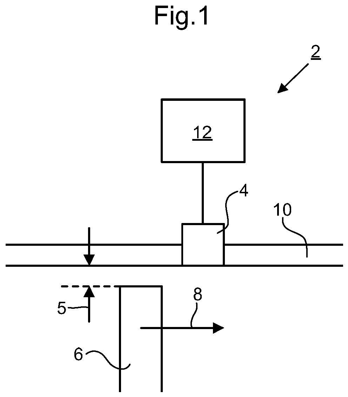

Embodiments of the disclosure relate to an apparatus 2 for monitoring clearance 5. An example of such an apparatus 2 is shown in Figure 1. The apparatus 2 comprises a sensor 4. The sensor 4 outputs a signal dependent on a separation between a moving component 6 and a reference structure 10. In the example shown, the reference structure 10 is a housing. In some embodiments, the sensor 4 outputs a signal dependent on a separation between the component 6 and the sensor 4. Thus, the sensor 4 may be a proximity sensor. In some embodiments, the sensor 4 comprises an eddy current sensor. In some embodiments, the sensor 4 comprises a capacitive sensor. In the example shown, the sensor 4 is mounted to the reference structure 10 (e.g. housing) and the component 6 is configured to move (arrow 8) relative to the reference structure 10 (e.g. housing). The component 6 may comprise the tip of a turbine blade and the reference structure 10 may comprise a turbine housing that radially surrounds the tips of all turbine blades of a turbine. The movement 8 of the component 6 arises in this case due to rotation of the turbine within the turbine housing.

The output from the sensor 4 is directed to a measurement unit 12 that is configured to determine information about a clearance 5 between the component 6 and the reference structure 10.

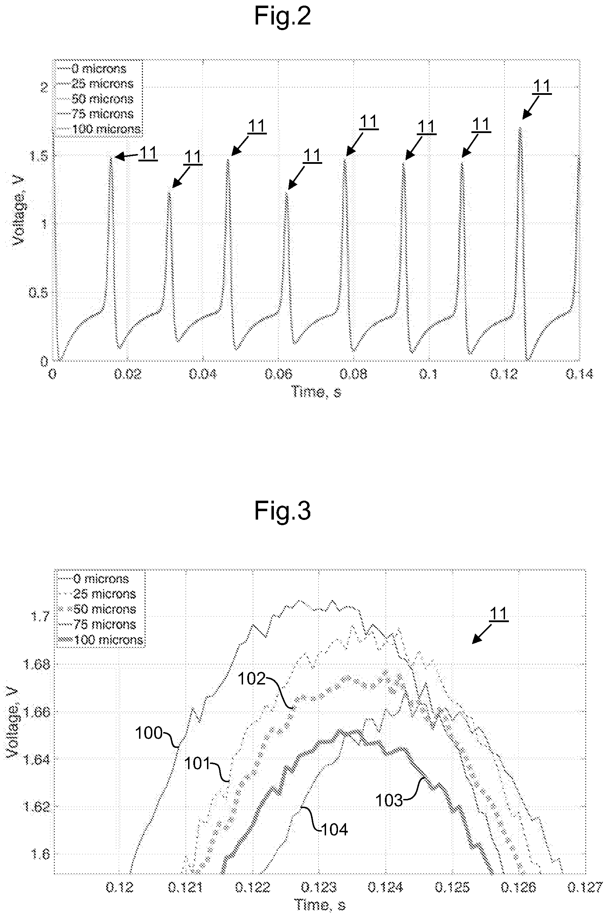

Figure 2 depicts an example output from the sensor 4 during measurements at different nominal clearances between turbine blades and a housing. The sensor 4 in this example is an eddy current sensor. The different nominal clearances include a reference clearance, a 25 micron clearance relative to the reference clearance, a 50 micron clearance relative to the reference clearance, a 75 micron clearance relative to the reference clearance, and a 100 micron clearance relative to the reference clearance. Each peak 11 in Figure 2 corresponds to passage of a different blade past the sensor 4. Differences between individual blades cause the peaks to vary in height from one blade to the next blade. For a given blade, the peaks 11 change by only a relatively small amount due to differences in clearance. The five curves shown in Figure 2 lie on top of each other at the scale depicted in Figure 2.

Figure 3 depicts one of the peaks 11 at a magnified scale. At this magnified scale, curves 100-104 corresponding to different clearances can be distinguished from each other. Curve 100 corresponds to the reference clearance, curve 101 corresponds to the 25 micron shift, curve 102 corresponds to the 50 micron shift, curve 103 corresponds to the 75 micron shift, curve 104 corresponds to the 100 micron shift. Increases in clearance cause the signal level from the sensor 4 to decrease. A peak value of each curve 100-105 could therefore be used to determine clearance.

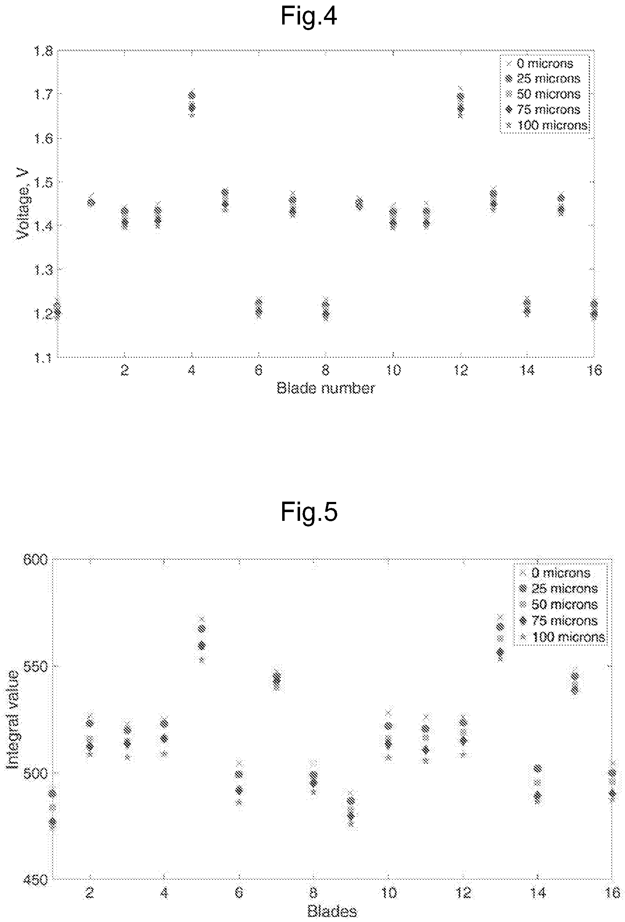

Figure 4 depicts peak values determined for a plurality of blades at different clearances. The peak values vary considerably from blade to blade, but the group of peak values for each blade are spaced apart from each other as a function of clearance and can therefore be used to obtain clearance. The relatively small variation in peak height as a function of clearance means that the signal to noise ratio can be relatively poor. As discussed above, accuracy can be improved by increasing a data sampling rate and/or using sophisticated averaging or curve fitting, but this leads to a corresponding increase in data storage and/or processing demands, which can be a problem where a real time response is required.

Embodiments of the present disclosure relate to an alternative approach based on integration of the sensor output.

In an embodiment, the measurement unit 12 performs a passage event integration. The passage event integration comprises integrating an output from the sensor 4 over at least a portion of a passage event of the component 6 past the sensor 4. A passage event is an instance of the component 6 passing in front of the sensor 4. Thus, in the case of a turbine blade passing a sensor positioned in a turbine housing, there would be one passage event per turbine blade during each revolution of the turbine. The measurement unit 12 then determines information about a clearance 5 between the component 6 and the reference structure 10 using a result of the passage event integration (e.g. an integral value corresponding to at least a portion of the passage event).

The integration process intrinsically reduces noise because the integral of random noise tends to zero. This reduction in noise is achieved without needing to store large amounts of data to perform an alternative post-processing averaging process or curve fitting. The integration can be performed efficiently and reliably, for example, using analogue circuitry. The integral can be obtained, for example, by converting the signal to be integrated to a current and monitoring the build up of charge on a capacitor.

Figure 5 depicts integral values corresponding to the peak values shown in Figure 4. The resolution with respect to clearance is higher than when peak values only are used, as shown in Figure 4. The difference is illustrated by comparing the variance in values of clearance obtained using the two methods, as depicted in the table below. The variance when using the peak method is considerably higher than when using the integral method.

| Clearance relative to reference (microns) | Variance in clearance obtained using peak method | Variance in clearance obtained using integral method |
|---|---|---|
| 0 | 0.1001 | 0.0467 |
| 25 | 0.1 | 0.0466 |
| 50 | 0.0999 | 0.0472 |
| 75 | 0.0999 | 0.0484 |
| 100 | 0.0999 | 0.0488 |

In an embodiment, the determination of information about a clearance comprises comparing an integral value obtained by the passage event integration with a reference integral value. For example, an integral value obtained by the passage event integration during one passage event of the component 6 may be compared with an integral value obtained by the passage event integration during an earlier passage event of the same component 6. In an embodiment, the earlier passage event is a passage event during an immediately preceding rotation of a turbine. In other embodiments, the earlier passage event is a passage event during an earlier rotation of the turbine at a reference rotation speed. The reference rotation speed may be a relatively low rotation speed (e.g. less than 2000rpm, optionally less than 1500rpm, optionally less than 1000rpm, optionally less than 500rpm). At such low rotation speeds, blades will not have grown radially to a significant extent. Changes in clearance measured relative to such a reference will therefore provide a measure of a total amount of radial blade growth.

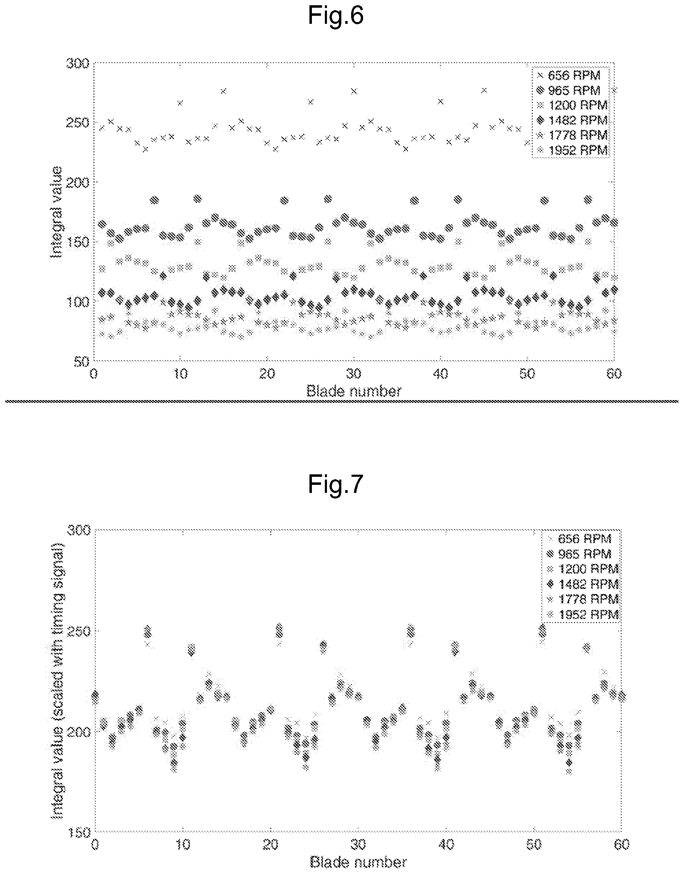

The size of the integral value will typically vary as a function of the speed of the component 6 past the sensor 4. This is illustrated in Figure 6, which depicts measurements of the integral value obtained using the experimental setup used to obtain the data shown in Figures 2-5, for different rotation speeds of a turbine (see legend in top right of figure). For the range of rotation speeds covered (from 656rpm to 1952rpm), the variation in the integral value due to differences in rotation speed would be larger than variations due to differences in clearance. In an embodiment, a speed-dependent correction is applied to compensate for this effect.

In an embodiment, the speed-dependent correction is based on calibration measurements using multiple passage event integrations at different speeds of the component 6 past the sensor 4, optionally within the clearance arranged to be relatively constant.

Alternatively, in a case where the magnitude of an output magnitude from the sensor 4 does not vary significantly as a function of the speed of the component 6 past the sensor 4, which will typically be the case for an eddy current sensor or a capacitive sensor (but not for a reluctance sensor), it is expected that the integral value will vary linearly with the speed. A change in speed will only change the time period over which the integral is performed for each passage event. In embodiments involving rotation of a turbine, the speed-dependent correction may in this case be performed by deriving a scale factor based on a ratio between a timing signal obtained for a current revolution of the turbine and a corresponding timing signal obtained for a reference rotation of the turbine. Thus, for example, the scale factor may comprise a ratio between a time interval between passage of the blade being measured and an immediately preceding blade for the current rotation and a time interval between passage of the same blade and the immediately preceding blade for an earlier rotation, for example a first measured rotation, of the turbine. If the scale factor is derived in the same way for all measurements, then the variation with rotational speed of the turbine will be removed and the variation in integral values will represent only differences in clearance, as desired. Figure 7 depicts the result of applying such a scale factor to the data depicted in Figure 6. The large variation with rotation speed (rpm) is removed.

In an embodiment, the determined information about clearance is used as input to an adaptive clearance control system which actively adjusts the clearance in real time. Systems for adaptive clearance control are known in the art at a general level. Such systems are configured to dynamically control clearance in real time. An average clearance can therefore be made lower than would be possible without the dynamic control. Lowering an average clearance can improve fuel efficiency. Various approaches for controlling clearance are known. In one class of system, a turbine housing is made to expand or contract by controlling a temperature of gas flowing through ducts in the turbine housing.

In an embodiment, the measurement unit 12 is further configured to generate a timing signal for registering passage of the component 6 past the sensor 4. The timing signal is generated by integrating the output from the sensor 4. The need for separate apparatus for measuring clearance and for generating a timing signal is therefore minimized or avoided. Cost and/or weight savings can therefore be made.

An example methodology is as follows. A passage event integration is performed during a first passage event of a reference component past the sensor 4 to obtain a first integral value. A passage event integration is performed during a second passage event of a component 6 to be measured past the sensor 4. A timing signal is generated when the passage event integration during the second passage event reaches a predetermined fraction of the first integral value. In an embodiment, the second passage event occurs after the first passage event. In embodiments where the determination of the information about a clearance comprises applying a speed-dependent correction to the result of the passage event integration, the speed-dependent correction may be obtained based on the timing signal generated in this manner.

In an embodiment, the apparatus 2 is used as part of a device for detecting a fault condition in an apparatus comprising a cyclically moving component 6. In such an embodiment, time delays between timing signals obtained at different times by the measurement unit 12 may be analysed in order to detect a fault condition. In an embodiment, a fault condition in a turbine is detected, with the component 6 to be measured being the tip of a rotor blade and the timing signals being generated for a plurality of the rotor blades. In such an embodiment, the timing signals may be analysed in order to detect when deformation of the rotor blades or vibration of the rotor blades exceeds a predetermined threshold.

In an embodiment the reference component and the component 6 to be measured are configured to move cyclically. The components may be mounted on a rotatable structure and may pass the sensor 4 at least once during each rotation of the rotatable structure. A plurality of the components 6 may be provided at different circumferential positions on the rotatable structure (e.g. blades of a turbine). Alternatively or additionally, the components 6 may be configured to reciprocate linearly or along any other trajectory.

In an embodiment, the reference component and the component 6 to be measured are the same component (e.g. the same blade tip). Alternatively, the reference component and the component 6 to be measured may be different components. For example, the reference component may be positioned so as to be the component that passes the sensor 4 directly before the component 6 to be measured (e.g. the reference component and the component 6 to be measured may be circumferentially neighbouring blade tips). Using a different component as the reference component may introduce a time shift to the timing signal due to a difference in shape or relative position of the reference component relative to the component 6 to be measured. For example, a difference in the size of a peak in the sensor output associated with passage of the different components may vary and may cause a shift in the timing signal. However, this time shift will be the same from one cycle to the next cycle and does not therefore have a negative effect on the usefulness of the timing signals for detecting fault conditions, which will generally be detected by compared timing signals corresponding to particular components from one cycle to another cycle. Furthermore, gains in accuracy may be obtained because the shorter time interval between measurement of the reference component and measurement of the component to be measured reduces the sensitivity to variations in the overall speed of movement of the components (e.g. the speed of rotation of the rotor in the context of measurement of turbine blades).

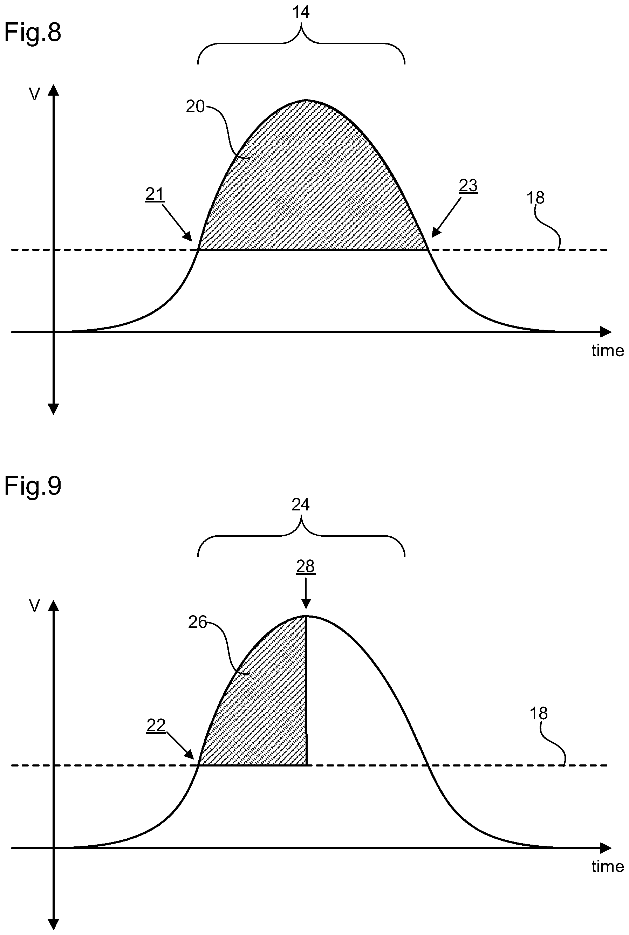

Figures 8 and 9 show a schematic output from the sensor 4 illustrating an embodiment. Figure 8 illustrates the sensor output for a first passage event 14 of a component 6 past the sensor 4. Figure 9 illustrates the sensor output for a second passage event 24 of a component 6 past the sensor 4.

In this embodiment, the passage event integration for the first passage event 14 is performed over a portion of the first passage event 14 in which the output from the sensor 4 is above a reference value (broken line 18). Thus, the first integral value is the hatched area 20 under the curve, above the broken line 18, and delimited by cross-over points 21 and 23.

In this embodiment, the passage event integration for the second passage event 24 is performed over a portion of the second passage event 24 starting from a point 22 at which the output from the sensor 4 first exceeds the reference value in the second passage event 24. The measurement unit 12 generates a timing signal when the passage event integration reaches a predetermined fraction of the first integral value. In the embodiment shown in Figure 9 the predetermined fraction is equal to 0.5 so the integration stops when the area 26 reaches half the area 20 shown in Figure 8, leading to generation of a timing signal at a position 28 that is near to or at the central point of the curve corresponding to the second passage event 24.

In an embodiment the reference value is determined based on (e.g. equal to) an average value of the output over a preceding period of time. The average value may be obtained using analogue circuitry, for example by means of a low-pass filter or long-term integrator (provided that a zero mean exists). The preceding period of time may correspond to a single movement cycle (e.g. a period of rotation) of the component, multiple cycles, or another period of time.

In an embodiment, the apparatus 2 is configured to output information about clearance (e.g. clearance values) and/or timing signals substantially in real time. For example, in an embodiment the component 6 is configured to move cyclically and the information about clearance of the component and/or a timing signal registering passage of the component 6 past the sensor 4 may be output by the measurement unit 12 before the same component 6 passes the sensor 4 again during a subsequent cycle. Alternatively or additionally, the information about clearance of the component 6 and/or the timing signal registering passage of the component 6 past the sensor 4 may be output by the measurement unit 12 before the same component 6 passes the sensor 4 two times, five times or more.

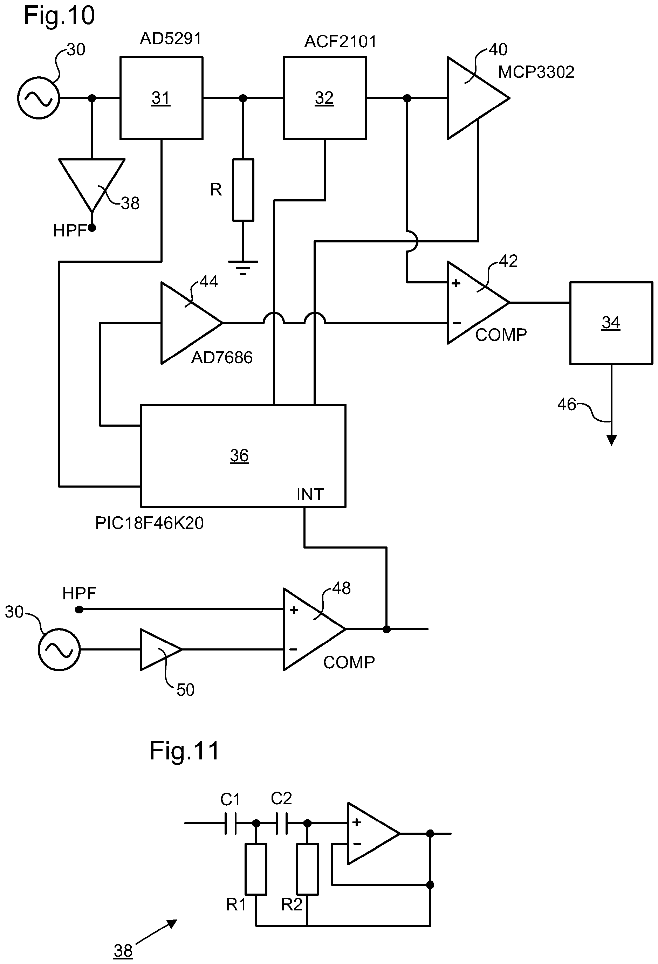

Figure 10 depicts in detail an example circuit for implementing at least part of the functionality provided by the measurement unit 12. Example component numbers are provided for selected components. According to this embodiment a demodulated signal from the sensor 4 is fed into the circuit via a coupling 30. The signal is fed through a programmable attenuator 31. The output from the attenuator 31 is fed to an integrator 32. The attenuator 31 ensures that an integration performed by the integrator 32 stays within the dynamic range of the device. Slow moving pulses (produced for example by a slowly rotating rotor) will have a larger "time" integration than faster moving (and therefore shorter) pulses. The integrator 32 is a high performance low noise analogue integrator whose output is the integration of the input current, scaled by the attenuator 31. The attenuator may be replaced by a synchronous gating circuit taking precisely the same number of samples over a fixed time regardless of rotor speed. The end effect provides the same control.

A width of a portion of the pulse that is to be integrated (corresponding to the time width of the passage event integration mentioned above) is computed by a comparator 48. The comparator 48 produces a gate signal to mark the beginning and end of the passage event integration for each pulse from the sensor 4. The comparator 48 compares an output from a high pass filter 38 with an output from a low pass filter 50. The low pass filter 50 calculates an average value of the output from the sensor 4 (corresponding to broken line 18 in Figures 8 and 9). Comparing the average value of the output from the sensor 4 with a high pass filtered version of the output makes it possible, for example, to identify the crossing points 21 and 23 shown in Figure 8, which represent the beginning and end of the integration for calculating the passage event integration corresponding to the first integral value.

The gate signal is fed into a fast interrupt port on a microprocessor 36. A background interrupt routine will compute the width of the passage event integration for each pulse, allowing the integrator 32 to compute the relevant area under the current curve. The total area (integral value) is computed for every pulse, every rotation. The output of the integrator 32 is a voltage from 0 to 10v. The attenuator 31 ensures the integration will always stay within that range. A one cycle history (comprising integral values for every component being cycled, e.g. every blade on the rotor) is stored as a number by the microprocessor 36. Each integral value may be used to obtain information about clearance of the corresponding component 6, as discussed above.

The integrator 32 voltage is measured by a fast 16 bit (65, 536 levels) Analogue to Digital converter 40. The resolution of each level of the ADC is 150µV. From a historic (e.g. one cycle or rotation old) measurement of the passage event integration, a midway (half, for example) value of the passage event integration is calculated by the microprocessor 36. For example if the first integral value was measured as 6V during the historic measurement a target integration value of 3V is calculated. This voltage is generated by a fast 16 bit Digital to Analogue converter 44 during the time a new pulse integration value is being measured (a passage event integration corresponding to a "second passage event", corresponding to the area 26 under the curve in Figure 9 for example). The historic 3V midway value is compared in real time by comparator 42 to the actual present integrated value. When the present integrated value reaches half the historic integrated value (first integral value) the comparator 42 "fires". This generates a non-retriggerable trigger pulse through the pulse generator 34, thereby forming an output timing signal 46.

The process is repeated for each successive component 6 (e.g. blade tip). The processor 36 will need to compute a long integer calculation for each component passage event. In this embodiment, the processor 36 stores one calculation for each passage event, each rotation. The calculation is used once and then it is replaced. The output timing signal 46 from the circuit will comprise a timing trigger pulse for each passage event (e.g. each passage of a blade tip). The leading edge of the trigger pulse will correspond precisely to the top centre of each pulse in the output from the sensor 4 (e.g. point 28 in Figure 9).

The integration is a "continuous" analogue function and so rises smoothly. The timing quantization error comes from how accurately the "mid power" voltage level can be set by DAC 44. In an experiment performed by the inventors, an integration performed using sampled data shows the integration to have a slope of 11mV over 50 samples, sampled at 220 ns (4.5 MHz) by an oscilloscope. 50 samples = 11µs (50×220 ns). Therefore a 16 bit DAC with a precision of 150 µV yields a theoretical time precision of 11µS/73 = 150 ns (11mV/150µV = 73). Other factors may reduce the ability to achieve this fully, but this simple theoretical case illustrates the high potential of the methodology.

Figure 10 depicts an example circuit for implementing the high pass filter 38. In an embodiment, the resistance values R1 and R2 are 75kΩ and 150kΩ respectively, and the capacitance values C1 and C2 are both 15nF.

The above discussion has focused on embodiments in which the component to be measured is a turbine blade. However, this is not essential. The approach may be applied to measure clearance and/or generate timing signals for many other types of component. For example, the approach could be applied to any rotating component, for example gear teeth on a gear wheel. The approach may be used on phonic wheels for speed and/or torque measurements.

## Claims

1. An apparatus (2) for measuring clearance between a component (6) and a reference structure (10), comprising:
a sensor (4) configured to output a signal that is dependent on a separation between the component (6) and the reference structure (10); and
a measurement unit (12) configured to:
perform a passage event integration comprising integrating an output from the sensor (4) over at least a portion of a passage event of the component (6) past the sensor (4); and
determine information about a clearance between the component (6) and the reference structure (10) using a result of the passage event integration,
**characterized in that** the measurement unit (12) is further configured to:
generate a timing signal for registering passage of a component (6) past the sensor (4) by:
performing the passage event integration during a first passage event of a reference component past the sensor (4) to obtain a first integral value;
performing the passage event integration during a second passage event of a component (6) to be measured past the sensor (4); and
generating a timing signal when the passage event integration during the second passage event reaches a predetermined fraction of the first integral value.

2. The apparatus (2) of claim 1, wherein the determination of information about a clearance comprises comparing an integral value obtained by the passage event integration with a reference integral value.

3. The apparatus (2) of claim 2, wherein the determination of information about a clearance comprises comparing the integral value obtained by the passage event integration with a reference integral value obtained by an earlier instance of the passage event integration performed during an earlier passage event of the same component (6).

4. The apparatus (2) of any preceding claim, wherein the determination of the information about a clearance comprises applying a speed-dependent correction to the result of the passage event integration, the speed-dependent correction being dependent on a speed of the component (6) relative to the sensor during the passage event.

5. The apparatus (2) of any preceding claim, wherein the reference component and the component (6) to be measured are:
the same component; or
different components and the reference component is positioned so as to be the component that passes the sensor directly before the component (6) to be measured.

6. The apparatus (2) of any preceding claim, wherein:
the determination of the information about a clearance comprises applying a speed-dependent correction to the result of the passage event integration, the speed-dependent correction being dependent on a speed of the component (6) relative to the sensor (4) during the passage event; and
the speed-dependent correction is obtained based on the generated timing signal.

7. The apparatus (2) of any preceding claim, wherein the component (6) is mounted on a rotatable structure and passes the sensor (4) at least once during each rotation of the rotatable structure, wherein optionally a plurality of components of the same type as the component (6) to be measured are mounted at different circumferential positions on the rotatable structure, the components optionally comprising at least a portion of a rotor blade of a turbine.

8. The apparatus (2) of any preceding claim, wherein each passage event integration corresponds to integration performed only during a time period in which the output from the sensor (4) is above a reference value.

9. The apparatus (2) of any preceding claim, wherein the sensor (4) is configured to output a signal that is dependent on a separation between the component (6) and the sensor (4).

10. The apparatus (2) of any preceding claim, wherein the sensor (4) comprises an eddy current sensor or a capacitive sensor.

11. An apparatus comprising:
a component (6) configured to be moved cyclically past a sensor; and
the apparatus (2) of any preceding claim configured to monitor a clearance between the component (6) and a reference structure of the apparatus.

12. A method of measuring clearance between a component (6) and a reference structure, comprising:
using a sensor (4) to output a signal that is dependent on a separation between the component and the reference structure (10);
performing a passage event integration comprising integrating an output from the sensor (4) over at least a portion of a passage event of the component (6) past the sensor (4); and
determining information about a clearance between the component (6) and the reference structure (10) using a result of the passage event integration,
**characterized by** further comprising:
generating a timing signal for registering passage of the component (6) past the sensor (4) by:
performing the passage event integration during a first passage event of a reference component past the sensor (4) to obtain a first integral value;
performing the passage event integration during a second passage event of the component (6) to be measured past the sensor (4); and
generating a timing signal when the passage event integration during the second passage event reaches a predetermined fraction of the first integral value.

13. The method of claim 12, comprising generating a plurality of the timing signals and analysing time delays between the timing signals to detect a fault condition.

14. The method of any of claims 12-13, wherein the components comprise at least a portion of a rotor blade of a turbine.

15. The method of any of claims 12-14, wherein the determined information about clearance is used as input to an adaptive clearance control system which actively adjusts the clearance in real time.

## Patentansprüche

1. Einrichtung (2) zum Messen des Abstandes zwischen einem Bauteil (6) und einer Referenzstruktur (10), umfassend:
einen Sensor (4), der dazu konfiguriert ist, ein Signal auszugeben, das von einer Trennung zwischen dem Bauteil (6) und der Referenzstruktur (10) abhängt; und
eine Messeinheit (12), die konfiguriert ist, zum:
Durchführen einer Durchgangsereignisintegration, umfassend das Integrieren eines Ausgangs von dem Sensor (4) über wenigstens einen Abschnitt eines Durchgangsereignisses des Bauteils (6) an dem Sensor (4) vorbei; und
Bestimmen von Informationen über einen Abstand zwischen dem Bauteil (6) und der Referenzstruktur (10) unter Verwendung eines Ergebnisses der Durchgangsereignisintegration,
**dadurch gekennzeichnet, dass** die Messeinheit (12) ferner konfiguriert ist, zum:
Erzeugen eines Zeitsignals zum Registrieren des Durchgangs eines Bauteils (6) an dem Sensor (4) vorbei durch:
Durchführen der Durchgangsereignisintegration während eines ersten Durchgangsereignisses eines Referenzbauteils an dem Sensor (4) vorbei, um einen ersten Integralwert zu erhalten;
Durchführen der Durchgangsereignisintegration während eines zweiten Durchgangsereignisses eines zu messenden Bauteils (6) an dem Sensor (4) vorbei; und
Erzeugen eines Zeitsignals, wenn die Durchgangsereignisintegration während des zweiten Durchgangsereignisses einen vorbestimmten Bruchteil des ersten Integralwertes erreicht.

2. Einrichtung (2) nach Anspruch 1, wobei die Bestimmung der Informationen über einen Abstand das Vergleichen eines durch die Durchgangsereignisintegration erhaltenen Integralwertes mit einem Referenzintegralwert umfasst.

3. Einrichtung (2) nach Anspruch 2, wobei die Bestimmung der Informationen über einen Abstand das Vergleichen des durch die Durchgangsereignisintegration erhaltenen Integralwerts mit einem Referenzintegralwert umfasst, der durch eine frühere Instanz der Durchgangsereignisintegration erhalten wurde, die während eines früheren Durchgangsereignisses desselben Bauteils (6) durchgeführt wurde.

4. Einrichtung (2) nach einem der vorhergehenden Ansprüche, wobei die Bestimmung der Informationen über einen Abstand das Anwenden einer geschwindigkeitsabhängigen Korrektur auf das Ergebnis der Durchgangsereignisintegration umfasst, wobei die geschwindigkeitsabhängige Korrektur von einer Geschwindigkeit des Bauteils (6) relativ zu dem Sensor während des Durchgangsereignisses abhängig ist.

5. Einrichtung (2) nach einem der vorhergehenden Ansprüche, wobei das Referenzbauteil und das zu messende Bauteil (6) sind:
dasselbe Bauteil; oder
unterschiedliche Bauteile, und das Referenzbauteil positioniert ist, um das Bauteil zu sein, das direkt an dem Sensor vor dem zu messenden Bauteil (6) vorbeigeht.

6. Einrichtung (2) nach einem der vorhergehenden Ansprüche, wobei:
die Bestimmung der Informationen über einen Abstand das Anwenden einer geschwindigkeitsabhängigen Korrektur auf das Ergebnis der Durchgangsereignisintegration umfasst, wobei die geschwindigkeitsabhängige Korrektur von einer Geschwindigkeit des Bauteils (6) relativ zu dem Sensor (4) während des Durchgangsereignisses abhängig ist; und
die geschwindigkeitsabhängige Korrektur auf Grundlage des erzeugten Zeitsignals erhalten wird.

7. Einrichtung (2) nach einem der vorhergehenden Ansprüche, wobei das Bauteil (6) an einer drehbaren Struktur montiert ist und den Sensor (4) wenigstens einmal während jeder Drehung der drehbaren Struktur passiert, wobei optional eine Mehrzahl von Bauteilen desselben Typs wie das zu messende Bauteil (6) an verschiedenen Umfangspositionen an der drehbaren Struktur montiert ist, wobei die Bauteile optional wenigstens einen Abschnitt einer Rotorschaufel einer Turbine umfassen.

8. Einrichtung (2) nach einem der vorhergehenden Ansprüche, wobei jede Durchgangsereignisintegration einer Integration entspricht, die nur während eines Zeitraums durchgeführt wird, in dem der Ausgang des Sensors (4) über einem Referenzwert liegt.

9. Einrichtung (2) nach einem der vorhergehenden Ansprüche, wobei der Sensor (4) dazu konfiguriert ist, ein Signal auszugeben, das von einer Trennung zwischen dem Bauteil (6) und dem Sensor (4) abhängig ist.

10. Einrichtung (2) nach einem der vorhergehenden Ansprüche, wobei der Sensor (4) einen Wirbelstromsensor oder einen kapazitiven Sensor umfasst.

11. Einrichtung, umfassend:
ein Bauteil (6), das dazu konfiguriert ist, zyklisch an einem Sensor vorbei bewegt zu werden; und
die Einrichtung (2) nach einem der vorhergehenden Ansprüche, die dazu konfiguriert ist, einen Abstand zwischen dem Bauteil (6) und einer Referenzstruktur der Einrichtung zu überwachen.

12. Verfahren zum Messen des Abstands zwischen einem Bauteil (6) und einer Referenzstruktur, umfassend:
Verwenden eines Sensors (4) für die Ausgabe eines Signals, das von einer Trennung zwischen dem Bauteil und der Referenzstruktur (10) abhängt;
Durchführen einer Durchgangsereignisintegration, die das Integrieren eines Ausgangssignals von dem Sensor (4) über wenigstens einem Abschnitt eines Durchgangsereignisses des Bauteils (6) an dem Sensor (4) vorbei umfasst; und
Bestimmen von Informationen über einen Abstand zwischen dem Bauteil (6) und der Referenzstruktur (10) unter Verwendung eines Ergebnisses der Durchgangsereignisintegration,
**dadurch gekennzeichnet, dass** es ferner umfasst:
Erzeugen eines Zeitsignals zum Registrieren des Durchgangs eines Bauteils (6) an dem Sensor (4) vorbei durch:
Durchführen der Durchgangsereignisintegration während eines ersten Durchgangsereignisses eines Referenzbauteils an dem Sensor (4) vorbei, um einen ersten Integralwert zu erhalten;
Durchführen der Durchgangsereignisintegration während eines zweiten Durchgangsereignisses eines zu messenden Bauteils (6) an dem Sensor (4) vorbei; und
Erzeugen eines Zeitsignals, wenn die Durchgangsereignisintegration während des zweiten Durchgangsereignisses einen vorbestimmten Bruchteil des ersten Integralwertes erreicht.

13. Verfahren nach Anspruch 12, umfassend das Erzeugen einer Mehrzahl der Zeitsignale und das Analysieren von Zeitverzögerungen zwischen den Zeitsignalen, um einen Fehlerzustand zu erkennen.

14. Verfahren nach einem der Ansprüche 12-13, wobei die Bauteile wenigstens einen Abschnitt einer Rotorschaufel einer Turbine umfassen.

15. Verfahren nach einem der Ansprüche 12-14, wobei die bestimmten Informationen über den Abstand als Eingabe für ein adaptives Abstandssteuersystem verwendet wird, das den Abstand aktiv in Echtzeit anpasst.

## Revendications

1. Appareil (2) pour mesurer le jeu entre un composant (6) et une structure de référence (10), comprenant :
un capteur (4) configuré pour sortir un signal qui dépend d'une séparation entre le composant (6) et la structure de référence (10) ; et
une unité de mesure (12) configurée pour :
effectuer une intégration d'événement de passage comprenant l'intégration d'une sortie du capteur (4) sur au moins une partie d'un événement de passage du composant (6) devant le capteur (4) ; et
déterminer des informations concernant un jeu entre le composant (6) et la structure de référence (10) en utilisant un résultat de l'intégration d'événement de passage, **caractérisé en ce que** l'unité de mesure (12) est en outre configurée pour :
générer un signal de synchronisation pour enregistrer le passage d'un composant (6) devant le capteur (4) en :
effectuant l'intégration d'événement de passage pendant un premier événement de passage d'un composant de référence devant le capteur (4) pour obtenir une première valeur intégrale ;
effectuant l'intégration d'événement de passage pendant un deuxième événement de passage d'un composant (6) à mesurer devant le capteur (4) ; et
générant un signal de synchronisation lorsque l'intégration d'événement de passage pendant le deuxième événement de passage atteint une fraction prédéterminée de la première valeur intégrale.

2. Appareil (2) selon la revendication 1, dans lequel la détermination d'informations concernant un jeu comprend la comparaison d'une valeur intégrale obtenue par l'intégration d'événement de passage avec une valeur intégrale de référence.

3. Appareil (2) selon la revendication 2, dans lequel la détermination d'informations concernant un jeu comprend la comparaison de la valeur intégrale obtenue par l'intégration d'événement de passage avec une valeur intégrale de référence obtenue par une instance antérieure de l'intégration d'événement de passage effectuée lors d'un événement de passage antérieur du même composant (6).

4. Appareil (2) selon l'une quelconque des revendications précédentes, dans lequel la détermination des informations concernant un jeu comprend l'application d'une correction dépendante de la vitesse au résultat de l'intégration d'événement de passage, la correction dépendante de la vitesse étant dépendante d'une vitesse du composant (6) par rapport au capteur lors de l'événement de passage.

5. Appareil (2) selon l'une quelconque des revendications précédentes, dans lequel le composant de référence et le composant (6) à mesurer sont :
le même composant ; ou
des composants différents et le composant de référence est positionné de manière à être le composant qui passe devant le capteur directement avant le composant (6) à mesurer.

6. Appareil (2) selon l'une quelconque des revendications précédentes, dans lequel :
la détermination des informations concernant un jeu comprend l'application d'une correction dépendante de la vitesse au résultat de l'intégration d'événement de passage, la correction dépendante de la vitesse étant dépendante d'une vitesse du composant (6) par rapport au capteur (4) lors de l'événement de passage ; et
la correction dépendante de la vitesse est obtenue sur la base du signal de synchronisation généré.

7. Appareil (2) selon l'une quelconque des revendications précédentes, dans lequel le composant (6) est monté sur une structure rotative et passe devant le capteur (4) au moins une fois lors de chaque rotation de la structure rotative, dans lequel éventuellement une pluralité de composants du même type que le composant (6) à mesurer sont montés à différentes positions circonférentielles sur la structure rotative, les composants comprenant éventuellement au moins une partie d'une aube de rotor d'une turbine.

8. Appareil (2) selon l'une quelconque des revendications précédentes, dans lequel chaque intégration d'événement de passage correspond à une intégration effectuée uniquement pendant une période de temps pendant laquelle la sortie du capteur (4) est supérieure à une valeur de référence.

9. Appareil (2) selon l'une quelconque des revendications précédentes, dans lequel le capteur (4) est configuré pour sortir un signal qui dépend d'une séparation entre le composant (6) et le capteur (4).

10. Appareil (2) selon l'une quelconque des revendications précédentes, dans lequel le capteur (4) comprend un capteur à courants de Foucault ou un capteur capacitif.

11. Appareil comprenant :
un composant (6) configuré pour être déplacé cycliquement devant un capteur ; et
l'appareil (2) selon l'une quelconque des revendications précédentes configuré pour surveiller un jeu entre le composant (6) et une structure de référence de l'appareil.

12. Procédé de mesure du jeu entre un composant (6) et une structure de référence, comprenant :
l'utilisation d'un capteur (4) pour sortir un signal qui dépend d'une séparation entre le composant et la structure de référence (10) ;
la réalisation d'une intégration d'événement de passage comprenant l'intégration d'une sortie du capteur (4) sur au moins une partie d'un événement de passage du composant (6) devant le capteur (4) ; et
la détermination d'informations concernant un jeu entre le composant (6) et la structure de référence (10) en utilisant un résultat de l'intégration d'événement de passage,
**caractérisé en ce qu'**il comprend en outre :
la génération d'un signal de synchronisation pour enregistrer le passage du composant (6) devant le capteur (4) en :
effectuant l'intégration d'événement de passage lors d'un premier événement de passage d'un composant de référence devant le capteur (4) pour obtenir une première valeur intégrale ;
effectuant l'intégration d'événement de passage lors d'un deuxième événement de passage du composant (6) à mesurer devant le capteur (4) ; et
générant un signal de synchronisation lorsque l'intégration d'événement de passage pendant le deuxième événement de passage atteint une fraction prédéterminée de la première valeur intégrale.

13. Procédé selon la revendication 12, comprenant la génération d'une pluralité des signaux de synchronisation et l'analyse de retards entre les signaux de synchronisation pour détecter une condition de défaut.

14. Procédé selon l'une quelconque des revendications 12 à 13, dans lequel les composants comprennent au moins une partie d'une aube de rotor d'une turbine.

15. Procédé selon l'une quelconque des revendications 12 à 14, dans lequel les informations déterminées concernant le jeu sont utilisées comme entrée dans un système de contrôle de jeu adaptatif qui ajuste activement le jeu en temps réel.
